Europäisches Patentamt

**European Patent Office**

Office européen des brevets

(19)

(11) Veröffentlichungsnummer: **0 237 714**

**A1**

(12) **EUROPÄISCHE PATENTANMELDUNG**

(21) Anmeldenummer: **87100561.7**

(22) Anmeldetag: **17.01.87**

(51) Int. Cl.⁴: **G05D 1/06 , F41G 7/34**

(30) Priorität: **14.02.86 DE 3604733**

(43) Veröffentlichungstag der Anmeldung:
**23.09.87 Patentblatt 87/39**

(84) Benannte Vertragsstaaten:
**DE FR GB IT**

(71) Anmelder: **Messerschmitt-Bölkow-Blohm
Gesellschaft mit beschränkter Haftung
Robert-Koch-Strasse
D-8012 Ottobrunn(DE)**

(72) Erfinder: **Feuerstein, Dieter W.
Savitsstrasse 24
D-8000 München 81(DE)**
Erfinder: **Triebe, Ullrich
Masurenring 47,
D-8206 Bruckmuehl(DE)**

(54) **Tiefflugverfahren zur automatischen Kursfindung.**

(57) Dieses Tiefflugverfahren dient der automatischen Kursfindung eines Flugzeuges unter Verwendung eines Geländespeichers, in dem das zu überfliegende Gelände in Form rasterartig verteilter Geländepunkte einschließlich der Höhenkoordinaten digital abgespeichert ist (digitales Geländehöhenmodell). Der Flugkurs wird mit Hilfe einer rechnerischen Analyse der gespeicherten Geländedaten bestimmt. Um den günstigsten Flugpfad unter Berücksichtigung etwa vorhandener gegnerischer Bedrohungsstellungen zu ermitteln, ist vorgesehen, daß für die in der Umgebung der Bedrohungsstellungen liegenden Geländepunkte jeweils eine Zusatzinformation abgespeichert wird, welche die Art und Reichweite der Bedrohung quantisiert.

EP 0 237 714 A1

## Tiefflugverfahren zur automatischen Kursfindung

Die Erfindung betrifft ein Tiefflugverfahren zur automatischen Kursfindung unter Verwendung eines Geländespeichers, in dem das zu überfliegende Gelände in Form rasterartig verteilter Geländepunkte einschließlich der Höhenkoordinaten digital abgespeichert ist - (digitales Geländehöhenmodell), wobei der Flugkurs mit Hilfe einer rechnerischen Analyse der gespeicherten Geländedaten bestimmt wird.

Ein derartiges Tiefflugverfahren ist beispielsweise in der von derselben Anmelderin am 12.02.86 mit dem Titel "Tiefflugverfahren zur automatischen Kursbestimmung" eingereichten deutschen Patentanmeldung (Anmeldungsnummer: P ........) beschrieben. Gemäß dem dortigen Verfahren wird vom Flugzeug ein Geländespeicher mitgeführt, in dem ein digitales Geländehöhenmodell des interessierenden, zu überfliegenden Geländes in Form der Ortskoordinaten (einschließlich der Höhenkoordinaten) von über das Gelände netzartig verteilten Geländepunkten abgespeichert ist. Diese Geländedaten werden mit dem Ziel rechnerisch analysiert, einen Flugweg zwischen einer Startposition und einem vorgegebenen Zielort zu finden, welcher Geländehöhen möglichst weitgehend vermeidet, um sich nicht der Gefahr einer gegnerischen Einwirkung auszusetzen. Hierzu werden in gewissen Zeitabständen von der jeweiligen Flugposition ausgehende, größere oder kleinere Fächer über die Punktmenge des digitalen Geländehöhenmodells gelegt und in verschiedenen Segmenten dieser Fächer jeweils gewisse Höhenmittelwerte gebildet. Anhand dieser Mittelwerte werden nach vorgegebenen Kriterien Kurskommandos erteilt.

Bei dem beschriebenen bekannten Verfahren dient die Mitführung und Verwendung eines Geländespeichers dem Zweck, einen der gegnerischen Aufklärung bzw. Einwirkung möglichst wenig ausgesetzten Flugpfad zu ermitteln. Hierzu werden die realen Geländehöhen, repräsentiert durch das digitale Geländehöhenmodell, verwertet. Sicher sind auf der Basis eines derartigen digitalen Geländehöhenmodells auch andere Auswertungsverfahren möglich. Allen diesen Verfahren ist jedoch gemeinsam, daß lediglich das wirklich vorhandene Gelände berücksichtigt wird. Hierbei wird jedoch außer acht gelassen, daß auch auf dem günstigsten ausgewählten Flugpfad gegnerische Abwehrstellungen existieren können, durch die das anfliegende Flugzeug dann direkt bedroht wäre.

Der Erfindung liegt daher die Aufgabe zugrunde, ein Tiefflugverfahren der eingangs genannten Art bereitzustellen, welches in der Lage ist, den günstigsten Flugpfad unter Berücksichtigung etwa vorhandener gegnerischer Bedrohungsstellungen zu ermitteln.

Diese Aufgabe wird gemäß der Erfindung dadurch gelöst, daß bei Vorliegen einer gegnerischen Bedrohungsstellung in dem zu überfliegenden Gelände für die in deren Umgebung liegenden Geländepunkte jeweils eine die Art und Reichweite der Bedrohung quantisierende Zusatzinformation abgespeichert wird.

Als Bedrohrungsstellung kommen vor allen Dingen Flugabwehr-Geschütz-oder Raketenstellungen infrage. Derartige Bedrohungsstellungen sowie deren Umgebung sind ebenso wie reale Geländeerhebungen nach Möglichkeit zu umfliegen. Daher schlägt die Erfindung vor, zu den abgespeicherten Daten der in dieser Umgebung liegenden Geländepunkte (Ortskoordinaten, Höhenkoordinaten) noch eine zusätzliche Information abzuspeichern, welche von der Art und Reichweite der Bedrohungsstellung abhängt. Hier werden Kenntnisse über die Geschoßart, deren Geschwindigkeit usw. verwertet. Bei der Auswertung des so durch die Zusatzinformationen modifizierten digitalen Geländehöhenmodells zur Kursfindung können dann diese Zusatzinformationen mit berücksichtigt werden, so daß im Ergebnis auch gegnerische Bedrohungsstellungen vermieden werden.

Die Abspeicherung der Zusatzinformation kann derart geschehen, daß die Höhenkoordinaten der in der Umgebung der Bedrohungsstellung liegenden Geländepunkte additiv vergrößert oder mit einem Multiplikator versehen werden. Bei der ersteren Verfahrensweise werden nicht mehr die wirklichen, sondern künstlich aufgestockte Geländehöhen direkt gespeichert. Alternativ kann zu den abgespeicherten Daten der jeweils betroffenen Geländepunkte auf einem zusätzlichen Speicherplatz jeweils ein Multiplikator abgespeichert werden, was einerseits zwar das eigentliche digitale Geländehöhenmodell unverändert läßt, andererseits jedoch erhöhten Speicherplatz erfordert. Multiplikatoren können auch leicht korrigert bzw. eliminiert werden, ohne daß die Daten des abgespeicherten digitalen Geländehöhenmodells tangiert werden, etwa dann, wenn eine oder mehrere der zuvor vorhandenen Bedrohungsstellungen ausgeschaltet worden sind. Bei der Auswertung zum Zwecke der Kursfindung sind die Höhenkoordinaten der betreffenden Geländepunkte einfach mit den Multiplikatoren zu multiplizieren, so daß sich auch hier eine künstlich aufgestockte Geländehöhe ergibt.

Selbstverständlich ist bei der Bestimmung der quantisierenden Zusatzinformationen in Rechnung zu stellen, welcher Art die jeweilige Bedrohungsstellung ist. Die von dieser ausgehende Gefahr wird recht unterschiedlich sein, je nachdem ob es sich beispielsweise um eine Flugabwehr-oder eine Raketenstellung mit ungesteuerten Geschossen bzw. Raketen oder um eine solche mit zielsuchenden Flugkörpern handelt. In diesen drei Fällen sind unterschiedliche Reichweiten einzukalkulieren, so daß die Form und Größe der Umgebung, innerhalb welcher die Geländepunkte mit Zusatzinformationen zu versehen sind, unterschiedlich ausfällt. In diesem Zusammenhang wird es im allgemeinen zweckmäßig sein, die zu den Höhenkoordinaten der in der Umgebung der Bedrohungsstellung liegenden Geländepunkte hinzuzuaddierenden Beträge oder zusätzlich abzuspeichernden Multiplikatoren mit zunehmender Entfernung von der Bedrohungsstellung abnehmen zu lassen. So kann beispielsweise ein Bedrohungsprofil ausgewählt werden, welches die Form eines sich nach oben verjüngenden Kegels mit der Kegelachse am Ort der Bedrohungsstellung aufweist. Die durch die Kegelmantelfläche in bezug auf die ebene Grundfläche des Kegels gegebenen Höhen sind dann den Höhenkoordinaten des realen Geländes hinzuzufügen. Neben der Kegelform sind auch andere Formen des Bedrohungsprofiles denkbar, beispielsweise solche nach Art einer doppelt geschwungenen Kurve, welche vom Ort der Bedrohungsstellung ausgehend nach allen Seiten hin zuerst langsam, dann schneller und schließlich wieder langsamer abfällt oder umgekehrt. Als einfachstes Bedrohungsprofil kann ein in einer gewissen Höhe abgeschnittener Kreiszylinder mit der Zylinderachse am Ort der Bedrohungsstellung gewählt werden.

## Ansprüche

1. Tiefflugverfahren zur automatischen Kursfindung unter Verwendung eines Geländespeichers, in dem das zu überfliegende Gelände in Form rasterartig verteilter Geländepunkte einschließlich der Höhenkoordinaten digital abgespeichert ist - (digitales Geländehöhenmodell), wobei der Flugkurs mit Hilfe einer rechnerischen Analyse der gespeicherten Geländedaten bestimmt wird, dadurch **gekennzeichnet,** daß bei Vorliegen einer gegnerischen Bedrohungsstellung in dem zu überfliegenden Gelände für die in deren Umgebung liegenden Geländepunkte jeweils eine die Art und Reichweite der Bedrohung quantisierende Zusatzinformation abgespeichert wird.

2. Tiefflugverfahren nach Anspruch 1, dadurch **gekennzeichnet,** daß die Höhenkoordinaten der in der Umgebung der Bedrohungsstellung liegenden Geländepunkte additiv vergrößert oder mit einem Multiplikator versehen werden.

3. Tiefflugverfahren nach Anspruch 2, dadurch **gekennzeichnet,** daß die zu den Höhenkoordinaten hinzuzuaddierenden Beträge oder zusätzlich abzuspeichernden Multiplikatoren mit zunehmender Entfernung von der Bedrohungsstellung abnehmen.

Europäisches
Patentamt

**EUROPÄISCHER RECHERCHENBERICHT**

Nummer der Anmeldung

EP 87 10 0561

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | GB-A-2 060 306 (VEREINIGTE FLUGTECHNISCHE WERKE) * insgesamt * | 1 | G 05 D 1/06<br>F 41 G 7/34 |
| | ----- | | |
| | | | **RECHERCHIERTE SACHGEBIETE (Int. Cl.4)** |
| | | | G 05 D 1/00<br>F 41 G 7/00 |

Der vorliegende Recherchenbericht wurde für alle Patentansprüche erstellt.

| Recherchenort | Abschlußdatum der Recherche | Prüfer |
|---|---|---|
| BERLIN | 06-05-1987 | BEITNER M.J.J.B. |